# EUROPÄISCHE PATENTANMELDUNG

(11) **EP 1 199 484 A2**
(43) Veröffentlichungstag der Anmeldung: **24.04.2002**
(21) Anmeldenummer: 01122825.1
(22) Anmeldetag: 22.09.2001
(51) Int. Cl.: F16C 19/55

(54) **Dreiringwälzlager für Lüfterkupplung**

(30) Priorität: 20.10.2000 DE 10051985
(71) Anmelder: INA Wälzlager Schaeffler oHG, 91074 Herzogenaurach (DE)
(72) Erfinder: Ritter, Joachim, 91074 Herzogenaurach (DE); Stark, Johann, 91315 Höchstadt (DE)

(57) **Zusammenfassung**

Ein Lüfterrad (7) für eine elektromagnetische Lüfterkupplung ist mit Hilfe eines Dreiringlagers (8) auf einer Antriebswelle (1) gelagert, so dass drei verschiedene Umfangsgeschwindigkeiten des Lüfterrades (7) einstellbar sind.

Um den Verschleiß insbesondere bei stoßartigen Belastungen und oszillierenden Bewegungen des Dreiringlagers (8) herabzusetzen, ist dieses so gestaltet, dass unterschiedliche Werkstoffpaarungen im Wälzkontakt vorhanden sind.

## Beschreibung

### Anwendungsgebiet der Erfindung

Die Erfindung betrifft eine elektromagnetische Lüfterkupplung für eine Brennkraftmaschine mit einer in einem Gehäuse über voneinander beabstandete erste Wälzlager gehaltenen Antriebswelle, die an einem Ende über ein weiteres zweites Wälzlager mit einem Lüfterrad verbunden ist, wobei das zweite Wälzlager als ein aus einem Innenring, einem Zwischenring und einem Außenring bestehendes Dreiringlager mit dazwischen angeordneten Wälzkörperreihen ausgebildet ist, dessen Innenring fest mit der Antriebswelle, dessen Außenring fest mit dem Lüfterrad verbunden ist und dessen Zwischenring über eine erste Elektromagnetkupplung und dessen Außenring über eine zweite Elektromagnetkupplung mit der Antriebswelle kuppelbar sind.

### Hintergrund der Erfindung

Kühlmedien in Kraftfahrzeugen werden mittels Lüfter gekühlt, wobei die Temperatur des Kühlmittels direkt zur Ansteuerung der Elektromagnet-Lüfterkupplung genutzt wird. Mit dieser elektronisch gesteuerten Kupplung wird gewährleistet, dass die Betriebstemperatur des Motors auf gleichbleibend hohem Niveau gehalten, die Motorleistung optimal ausgenutzt und der Schadstoffanteil in den Abgasen reduziert wird.

Eine derartige elektromagnetische Lüfterkupplung ist beispielsweise aus einem Prospekt der Firma LINNIG ANTRIEBSTECHNIK GMBH 9/89 vorbekannt. In dieser Vorveröffentlichung ist eine Antriebswelle über zwei voneinander beabstandete Wälzlager in einem Gehäuse gelagert. An einem Ende ist diese Welle mit einer Riemenscheibe verbunden, die über einen Riemen mit einer Kurbelwelle in Wirkverbindung steht. Am anderen Ende ist ein Lüfterrad über ein Dreiringlager mit der Antriebswelle verbunden. Zu dieser elektromagnetischen Lüfterkupplung gehören außerdem noch zwei Elektromagnetkupplungen, die den Außenring und den Zwischenring des Dreiringlagers mit der Antriebswelle kuppeln können. Auf diese Weise ist sichergestellt, dass der Lüfter mit drei verschiedenen Rotationsgeschwindigkeiten umlaufen kann.

Nachteilig dabei ist, dass bei bestimmten Betriebszuständen die im Dreiringlager angeordneten Wälzkörper praktisch stillstehen, während die zugehörigen Lagerringe mit hoher Geschwindigkeit umlaufen. Dadurch bedingt tritt ein hoher Verschleiß im Lager des Lüfterrades ein, der zu dessen vorzeitigem Ausfall führt. Dieser hohe Verschleiß des Lagers wird noch durch vorhandene Schwingungsbelastungen verstärkt, die durch die Ungleichförmigkeit der Drehbewegung der Kurbelwelle hervorgerufen werden, besonders dann, wenn die Lüfterkupplung direkt an der Kurbelwelle angebracht ist.

### Zusammenfassung der Erfindung

Aufgabe der Erfindung ist es daher, ein Wälzlager für ein damit verbundenes Lüfterrad der eingangs genannten so weiterzuentwickeln, dass das Wälzlager alle Betriebszustände der elektromagnetischen Lüfterkupplung problemlos verkraftet, d. h. eine lange Lebensdauer erreicht.

Erfindungsgemäß wird diese Aufgabe nach dem kennzeichnenden Teil von Anspruch 1 dadurch gelöst, dass wenigstens im zweiten Wälzlager unterschiedliche Werkstoffpaarungen beim Wälzkontakt vorhanden sind. Im erfindungsgemäßen Sinne ist darunter zu verstehen, dass Wälzkörper und die zugehörigen Lagerringe über ihren gesamten Querschnitt oder zumindest im Oberflächenbereich aus unterschiedlichen Materialien gefertigt sind. Dadurch tritt in den Kontaktstellen zwischen Wälzkörper und Lagerring eine Reibwertänderung ein, die eine Schädigung des Lagers vermeidet. So wird insbesondere vermieden, dass sich die Wälzkörper in ihre eigenen Laufbahnen eindrücken und diese somit beschädigen.

In Weiterbildung der Erfindung nach den Ansprüchen 2, 3 und 4 ist vorgesehen, dass die am Wälzkontakt beteiligten Partner mit einer verschleißarmen Hartbeschichtung ausgestattet sind. So soll nach Anspruch 2 wenigstens eine der zwischen Innenring und Zwischenring sowie Zwischenring und Außenring angeordneten Wälzkörperreihen mit dieser verschleißarmen Hartbeschichtung ausgestattet sein. Nach Anspruch 3 weist diese Hartbeschichtung die Laufbahn des Innenringes und die innere Laufbahn des Zwischenringes auf, während nach Anspruch 4 diese verschleißarme Hartbeschichtung die Laufbahn des Außenringes und die äußere Laufbahn des Zwischenringes aufweisen soll.

Nach einem anderen Merkmal der Erfindung gemäß Anspruch 5 soll die Beschichtung aus Chrom (Cr), Chromnitrid (CrN), Titannitrid (TiN), Titancarbonitrid (TiCN) oder aus Wolframcarbid/Kohlenstoff (WC/C) bestehen. Derartige Schichten zeichnen sich durch einen hohen Widerstand gegen Abrasion bei der Paarung mit Stahl aus.

Nach einem zusätzlichen weiteren Merkmal der Erfindung gemäß Anspruch 6 soll die Chromschicht eine Stärke von 0,01 bis 8,0 µm aufweisen.

Nach einem anderen Merkmal der Erfindung gemäß Anspruch 8 kann die Beschichtung entweder galvanisch, mittels PVD- oder mittels CVD-Verfahren abgeschieden sein. In Abhängigkeit von dem zu beschichtenden Bauteil wird das galvanische Beschichten entweder mittels Gestell oder als Massenteilbeschichten in Trommeln oder Glocken durchgeführt werden. Das CVD-Verfahren (Chemical Vapour Deposition) beruht auf der Abscheidung von Feststoffen durch chemische Reaktionen aus der Gasphase. Die CVD-Technik macht sich zu Nutze, dass flüchtige Verbindungen unter Zuführung von Wärme chemisch reagieren und einen entsprechenden Niederschlag ergeben. Unter dem Begriff PVD werden Beschichtungsverfahren zusammengefasst, mit denen Metall und ihre Legierungen sowie chemische Verbindungen wie Oxyde, Nitride, Carbide, durch Zufuhr thermischer oder kinetischer Energie mittels Teilchenbeschuss im Vakuum abgeschieden werden. Zu den PVD-Verfahren, die im Allgemeinen im Vakuum bei Temperaturen zwischen 500 und 550°C ablaufen, zählen das Aufdampfen im Hochvakuum, das lonenplattieren und die Katodenzerstäubung.

Die Aufgabe der Erfindung wird nach dem zweiten unabhängigen Anspruch 8 auch dadurch gelöst, dass wenigstens das zweite Wälzlager mit einem Festschmierstoff befüllt ist, der ggf. von einer Trägersubstanz aufgenommen ist, wobei diese Trägersubstanz gemäß Anspruch 9 ein Lithiumseifenfett auf Mineralölbasis ist. Im Gegensatz zu Anspruch 1 wird im vorliegenden Fall die Reibwertänderung im Wälzkontakt nicht durch die unterschiedliche Werkstoffpaarung der beteiligten Partner realisiert, sondern diese wird ausschließlich durch die zwischen den Reibflächen angeordneten Festschmierstoffpartikel gewährleistet.

Die Aufgabe der Erfindung kann nach dem dritten unabhängigen Anspruch 10 auch durch eine Kombination der Merkmale der Ansprüche 1 und 8 gelöst werden.

Schließlich ist nach Anspruch 11 vorgesehen, dass das zweite Wälzlager als ein Dreiringlager mit einem inneren und einem äußeren zweireihigen Schrägkugellager in O-Anordnung ausgebildet ist, wobei der Druckwinkel des inneren Lagers größer als der Druckwinkel des äußeren Lagers ist.

Die Erfindung wird an nachstehendem Ausführungsbeispiel näher erläutert.

### Kurze Beschreibung der Zeichnungen

Es zeigen:
- Figur 1: einen Längsschnitt durch eine elektromagnetische Lüfterkupplung nach dem bisherigen Stand der Technik;
- Figur 2: eine grafische Darstellung der Abhängigkeit der Lüfterdrehzahl von der Drehzahl der Antriebswelle bei verschiedenen Schaltstufen und
- Figur 3: ein erfindungsgemäßes Dreiring-Schrägkugellager zur Lüfterlagerung.

### Ausführliche Beschreibung der Zeichnungen

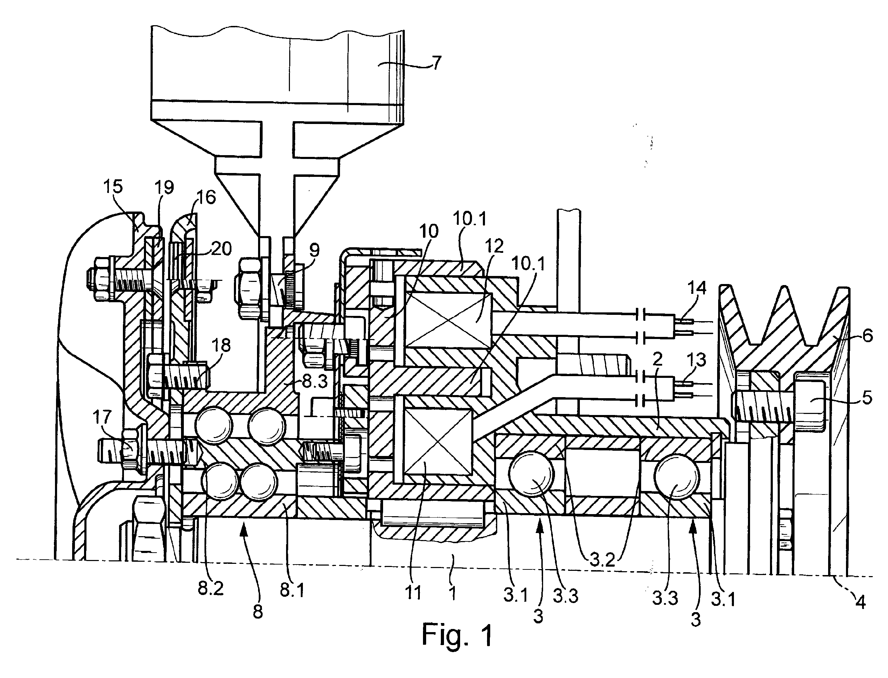

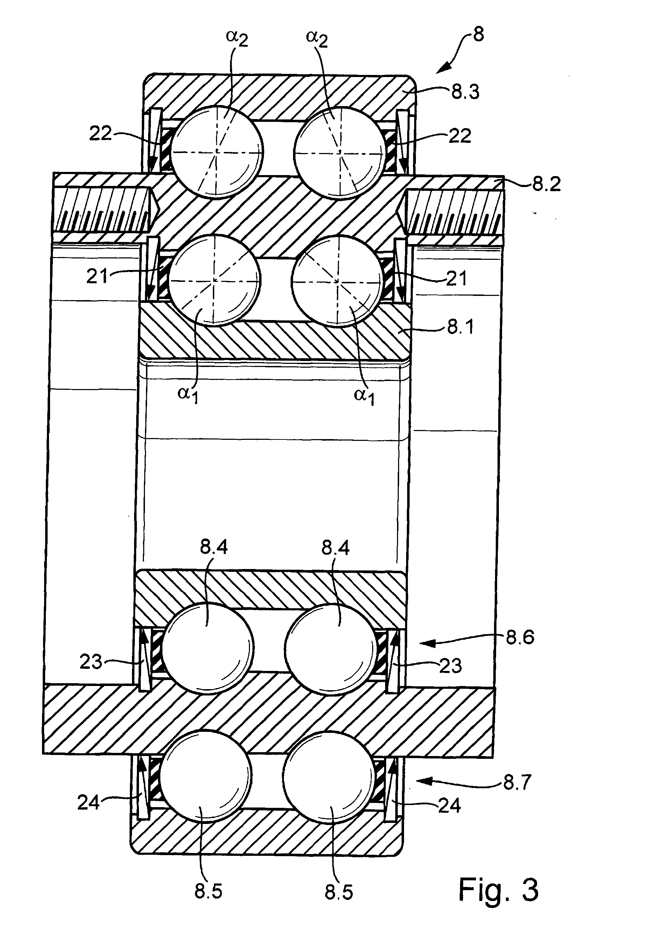

In Figur 1 ist die mit 1 bezeichnete Antriebswelle dargestellt, die im Gehäuse 2 über die beiden voneinander beabstandeten ersten Wälzlager 3 um ihre Achse 4 drehbar aufgenommen ist. Die ersten Wälzlager 3 sind im Beispiel als Kugellager mit Innenring 3.1, Außenring 3.2 und Kugelreihe 3.3 ausgebildet. Am rechtsseitigen Ende ist die Antriebswelle 1 mittels Befestigungsschrauben 5 mit der Riemenscheibe 6 verbunden und wird über diese angetrieben. Am linksseitigen Ende ist das Lüfterrad 7 über das zweite Wälzlager 8 mit der Antriebswelle 1 verbunden, wobei das zweite Wälzlager 8 gemäß Figur 3 aus dem Innenring 8.1, dem Zwischenring 8.2 und dem Außenring 8.3 besteht. Zum zweiten Wälzlager 8 gehören weiterhin die zwischen den Lagerringen 8.1, 8.2 und 8.3 abwälzenden nebeneinander und übereinander angeordneten Kugelreihen 8.4 und 8.5. Das Lüfterrad 7 ist mit dem Außenring 8.3 über Befestigungsschrauben 9 fest verbunden.

Zur Lüfterkupplung gehören ferner der mit der Antriebswelle 1 fest verbundene radial nach außen weisende Teil 10, von dem in axialer Richtung abzweigende Teile 10.1 abgehen. Im so gebildeten Zwischenraum ist die erste Magnetkupplung 11 und radial nach außen darüber angeordnet die zweite Elektromagnetkupplung 12 untergebracht, die über Zuführungen 13, 14 mit Strom beaufschlagt werden können. Zur Lüfterkupplung gehören ferner die Teile 15 und 16, die über Befestigungsschrauben 17 und 18 mit dem Zwischenring 8.2 bzw. dem Außenring 8.3 verbunden sind. Sowohl das mit dem Zwischenring 8.2 verbundene Teil 15 als auch das mit dem Außenring 8.3 verbundene Teil 16 sind an ihren einander zugewandten Stirnflächen mit je einem Permanentmagneten 19 und 20 bestückt.

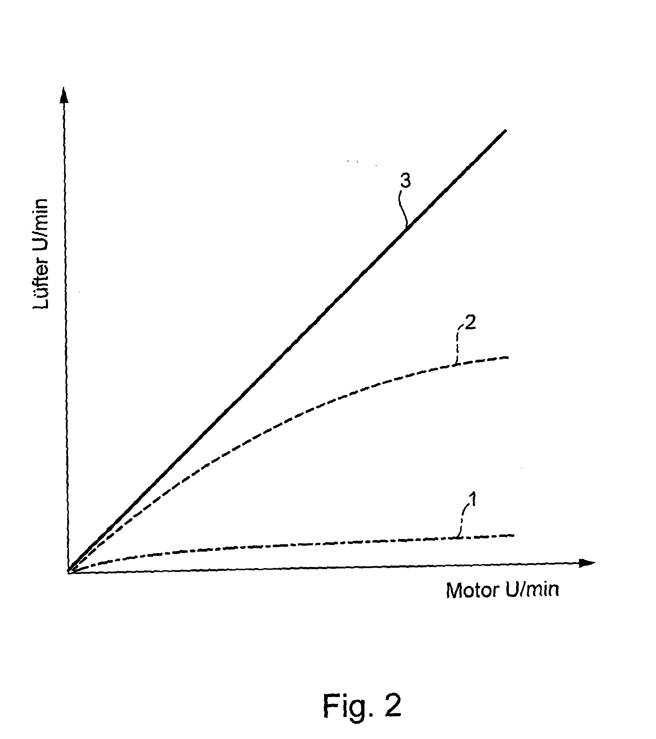

Die in Figur 2 dargestellten möglichen drei Betriebszustände der Lüfterkupplung werden nachstehend kurz erläutert. Bei Abschaltung sowohl der ersten als auch der zweiten Elektromagnetkupplung 11, 12 ergibt sich der in Figur 2 mit 1 bezeichnete Drehzahlverlauf. D. h. lediglich durch die Reibung des zweiten Wälzlagers 8 läuft das Lüfterrad 7 unabhängig von der Antriebswelle 1 mit einer Drehzahl von bis zu 100 U/min um. Wird die erste Elektromagnetkupplung 11 über einen Temperaturgeber eingeschaltet, so hat das Lüfterrad 7 über ein der Elektromagnetkupplung nachgeschaltetes, berührungs- und verschleißfrei arbeitendes Permanentsystem eine Drehzahl von etwa 1200 U/min, siehe Drehzahlverlauf 2. Die Kraftübertragung erfolgt in diesem Fall von der Antriebswelle 1 über die erste Elektromagnetkupplung 11 auf den Zwischenring 8, 2, von diesem über das mit ihm verbundene Teil 15 über dessen Permanentmagnet 19 auf den Permanentmagneten 20 und von dort auf das Teil 16, das wiederum mit dem Außenring 8.3 fest verbunden ist. Wird hingegen die zweite Elektromagnetkupplung 12 über einen zweiten Temperaturgeber eingeschaltet, so läuft der Lüfterflügel 7 synchron zur Antriebswelle 1, siehe Drehzahlverlauf 3 in Figur 2. Durch die zweite Elektromagnetkupplung 12 wird der Außenring 8.3 des zweiten Wälzlagers 8 an das radiale Teil 10 der Antriebswelle 1 gekuppelt und läuft daher mit der gleichen Geschwindigkeit um.

Das in Figur 3 in vergrößerter Darstellung und in abgewandelter Form gezeigte zweite Wälzlager 8 ist als ein Dreiringlager in Form eines doppelreihigen inneren Schrägkugellagers 8.6 und eines doppelreihigen äußeren Schrägkugellagers 8.7 in O-Anordnung ausgebildet. Wie erkennbar, ist der Druckwinkel α₁ des inneren Schrägkugellagers 8.6 größer als der Druckwinkel α₂ des zugehörigen äußeren Schrägkugellagers 8.7, so dass die Steifigkeit des zweiten Wälzlagers 8 erhöht ist. Dies ist von Vorteil, da die Last über den Innenring 8.1 eingeleitet wird. Sämtliche Lagerringe 8.1, 8.2 und 8.3 sind einstückig ausgebildet. Jede der Kugelreihen 8.4 und 8.5 ist in je einem separaten Käfig 21, 22 geführt und nach außen durch gegenüberliegende Dichtungen 21, 22 abgedichtet. Die Lagerringe 8.1, 8.2 und 8.3 sind aus dem Werkstoff 100Cr6 gefertigt und weisen nach dem Härten und Anlassen einen Wert von 58+6 HRC auf. Die Käfige 21, 22 bestehen aus einem Polyamid-Werkstoff.

In einem Chromelektrolyten mit 500 g/l Chromtrioxyd, 8 g/l Methansulfonsäure, 10 g/l Magnesiumsilicoflurorid und 0,1 ml/l Tetraethylammoniumperfluoroktansulfonat wurde eine Trommel eingehängt, in die eine Anzahl von Lagerkugeln aus einem Wälzlagerstahl eingefüllt waren. Diese Lagerkugeln wurden bei einer Stromdichte von etwa 1,5 A/cm² mit einer Schichtdicke von 0,7µm versehen. Die Betriebstemperatur des Chromelektrolyten lag bei etwa 40°. Die deᵣ₋ artig mit einer Chromschicht versehenen Lagerkugeln wurden im zweiten Wälzlager 8 gemäß Figur 3 als Lagerkugelreihen 8.4 eingesetzt und in einer elektromagnetischen Lüfterkupplung gemäß Figur 1 verbaut. Es zeigte sich, dass im Gegensatz zu herkömmlichen Lagerkugeln auch bei stroßartigen Belastungen und oszillierenden Bewegungen bzw. Vibrationen bei stillstehenden Kugelreihen 8.4, 8.5 und umlaufenden Lagerringen 8.1, 8.2, 8.3 eine erheblich längere Lebensdauer der Lüfteranordnung realisiert werden konnte.

Ähnlich gute Ergebnisse wurden mit einem in einer Lüfteranordnung verbauten Lager 8 erreicht, dessen Lagerbestandteile 8.1, 8.2, 8.3, 8.4 und 8.5 aus einem Wälzlagerstahl gefertigt und das mit einem Hochleistungsfett mit Festschmierstoffen befüllt war. Zum Einsatz kam das Produkt Gleitmo 585 M der Firma FUCHS LUBRITECH GMBH. Ein derart geschmiertes Wälzlager 8 zeigt sich in einer Lüfteranordnung auch bei den dort herrschenden stoßartigen Belastungen, Vibrationen und oszillierenden Bewegungen weitestgehend verschleißfrei gegenüber einer Lageranordnung nach dem bekannten Stand der Technik.

### Bezugszeichen

- 1: Antriebswelle
- 2: Gehäuse
- 3: erstes Wälzlager
- 3.1: Innenring
- 3.2: Außenring
- 3.3: Kugelreihe
- 4: Achse
- 5: Befestigungsschraube
- 6: Riemenscheibe
- 7: Lüfterrad
- 8: zweites Wälzlager
- 8.1: Innenring
- 8.2: Zwischenring
- 8.3: Außenring
- 8.4: Kugelreihe
- 8.5: Kugelreihe
- 8.6: inneres Schrägkugellager
- 8.7: äußeres Schrägkugellager
- 9: Befestigungsschraube
- 10: radialer Teil
- 10.1: axialer Teil
- 11: erste Elektromagnetkupplung
- 12: zweite Elektromagnetkupplung
- 13: Stromzuführung
- 14: Stromzuführung
- 15: Teil
- 16: Teil
- 17: Befestigungsschraube
- 18: Befestigungsschraube
- 19: Permanentmagnet
- 20: Permanentmagnet
- 21: Käfig
- 22: Käfig
- 23: Dichtung
- 24: Dichtung
- α_{1,2}: Druckwinkel

## Patentansprüche

1. Elektromagnetische Lüfterkupplung für eine Brennkraftmaschine mit einer in einem Gehäuse (2) über voneinander beabstandete erste Wälzlager (3) gehaltenen Antriebswelle (1), die an einem Ende über ein weiteres zweites Wälzlager (8) mit einem Lüfterrad (7) verbunden ist, wobei das zweite Wälzlager (8) als ein aus einem Innenring (8.1), einem Zwischenring (8.2) und einem Außenring (8.3) bestehendes Dreiringlager mit dazwischen angeordneten Wälzkörperreihen (8.4, 8.5) ausgebildet ist, dessen Innenring (8.1) fest mit der Antriebswelle (1), dessen Außenring (8.3) fest mit dem Lüfterrad (7) verbunden ist und dessen Zwischenring (8.2) über eine erste Elektromagnetkupplung (11) und dessen Außenring (8.3) über eine zweite Elektromagnetkupplung (12) mit der Antriebswelle (1) kuppelbar sind, **dadurch gekennzeichnet, dass** wenigstens im zweiten Wälzlager (8) unterschiedliche Werkstoffpaarungen beim Wälzkontakt vorhanden sind.

2. Elektromagnetische Lüfterkupplung nach Anspruch 1, **dadurch gekennzeichnet, dass** wenigstens eine der zwischen Innenring (8.1) und Zwischenring (8.2) sowie Zwischenring (8.2) und Außenring (8.3) angeordneten Wälzkörperreihen (8.4,8.5) mit einer verschleißarmen Hartbeschichtung versehen ist.

3. Elektromagnetische Lüfterkupplung nach Anspruch 1, **dadurch gekennzeichnet, dass** die Laufbahn des Innenringes (8.1) und die innere Laufbahn des Zwischenringes (8.2) mit einer verschleißarmen Hartbeschichtung versehen sind.

4. Elektromagnetische Lüfterkupplung nach Anspruch 1, **dadurch gekennzeichnet, dass** die Laufbahn des Außenringes (8.3) und die äußere Laufbahn des Zwischenringes (8.2) mit einer verschleißarmen Hartbeschichtung versehen sind.

5. Elektromagnetische Lüfterkupplung nach den Ansprüchen 1 bis 4, **dadurch gekennzeichnet, dass** die Beschichtung aus Chrom (Cr), Chromnitrid (CrN), Titannitrid (TiN), Titancarbonitrid (TiCN) oder aus Wolframcarbid/Kohlenstoff (WC/C) besteht.

6. Elektromagnetische Lüfterkupplung nach Anspruch 5, **dadurch gekennzeichnet, dass** die Chromschicht eine Stärke von 0,01 bis 8,0 µm aufweist.

7. Elektromagnetische Lüfterkupplung nach Anspruch 1, **dadurch gekennzeichnet, dass** die Beschichtung galvanisch, mittels PVD-Verfahren (Physical Vapour Deposition) oder mittels CVD-Verfahren (Chemical Vapour Deposition) erfolgt.

8. Elektromagnetische Lüfterkupplung nach dem Oberbegriff von Anspruch 1, **dadurch gekennzeichnet, dass** wenigstens das zweite Wälzlager (8) mit einem Festschmierstoff befüllt ist, der gegebenenfalls von einer Trägersubstanz aufgenommen ist.

9. Elektromagnetische Lüfterkupplung nach Anspruch 8, **dadurch gekennzeichnet, dass** die Trägersubstanz ein Lithiumseifenfett auf Mineralölbasis ist.

10. Elektromagnetische Lüfterkupplung nach dem Oberbegriff von Anspruch 1, **dadurch gekennzeichnet, dass** wenigstens im zweiten Wälzlager (8) unterschiedliche Werkstoffpaarungen beim Wälzkontakt vorhanden sind und dieses mit einem Festschmierstoff befüllt ist, der gegebenenfalls von einer Trägersubstanz aufgenommen ist.

11. Elektomagnetische Lüfterkupplung nach Anspruch 1, **dadurch gekennzeichnet, dass** das zweite Wälzlager (8) als Dreiringlager mit einem inneren und einem äußeren zweireihigen Schrägkugellager (8.6, 8.7) in O-Anordnung ausgebildet ist, wobei der Druckwinkel (α₁) des inneren Lagers (8.6) größer als der Druckwinkel (α₂) des äußeren Lagers (8.7) ist.
